# EUROPÄISCHE PATENTSCHRIFT

(11) **EP 1 080 508 B1**
(45) Veröffentlichungstag und Bekanntmachung des Hinweises auf die Patenterteilung: **16.01.2002**
(21) Anmeldenummer: 99924844.6
(22) Anmeldetag: 29.04.1999
(51) Int. Cl.: H01M 4/86

(54) **ELEKTRODE FÜR EINE BRENNSTOFFZELLE UND BRENNSTOFFZELLE**
ELECTRODE FOR A FUEL CELL AND FUEL CELL
ELECTRODE POUR PILE A COMBUSTIBLE ET PILE A COMBUSTIBLE CORRESPONDANTE

(30) Priorität: 30.04.1998 DE 19819326
(43) Veröffentlichungstag der Anmeldung: 07.03.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); BERGMANN, Andreé, D-53797 Lohmar (DE); KONIECZNY, Jörg-Roman, D-53721 Siegburg (DE)
(74) Vertreter: Kahlhöfer, Hermann, Dipl.-Phys.
(86) Internationale Anmeldenummer: EP9902921
(87) Internationale Veröffentlichungsnummer: WO9957774

(56) Entgegenhaltungen:
- PATENT ABSTRACTS OF JAPAN vol. 013, no. 564 (E-860), 14. Dezember 1989 (1989-12-14) & JP 01 235159 A (SANYO ELECTRIC CO LTD), 20. September 1989 (1989-09-20)
- PATENT ABSTRACTS OF JAPAN vol. 095, no. 004, 31. Mai 1995 (1995-05-31) & JP 07 022037 A (AQUEOUS RES:KK), 24. Januar 1995 (1995-01-24)

## Beschreibung

Die vorliegende Erfindung betrifft eine Elektrode für eine Brennstoffzelle und eine Brennstoffzelle mit zwei Elektroden verschiedener Polarität, zwischen denen ein Elektrolyt angeordnet ist, wobei die Elektrode für ein Fluid, insbesondere für ein Gas, von einer gasseitigen Oberfläche zu einer elektrolytseitigen Oberfläche durchgängigen Poren und wenigstens eine elektronenleitende Kontaktstelle aufweist.

Ebenso wie in anderen galvanischen Elementen wird in Brennstoffzellen die, beispielsweise bei der chemischen Verbindung von Wasserstoff (H₂) mit Sauerstoff (O₂) freiwerdende Bindungsenergie in elektrische Energie und Wärme umgewandelt. Grundsätzlich unterscheidet man zwischen Niedertemperatur-Brennstoffzellen (bis ca. 200°C) und Hochtemperatur-Brenstoffzellen (etwa 600 bis 1100°C). Dazwischen liegen die sogenannten schmelzkarbonate MCFC-Brennstoffzellen (Molten Carbonate Fuel Cell) mit einer Arbeitstemperatur von etwa 200 bis 600°C und mit einem in einer Matrix angeordneten Flüssigelektrolyten.

Hochtemperaturbrennstoffzellen, wie oxidkeramische Brennstoffzellen (SOFC; Solid Oxide Fuel Cell), enthalten beispielsweise einen Festelektrolyten aus Zirkondioxid der bei einer Arbeitstemperatur von 850 bis 1050°C ionenleitend ist. Sie werden überwiegend in stationären Anlagen für die dezentrale Energieversorgung betrieben.

Niedertemperatur-Brennstofftellen könnten in Verbindung mit einem Elektromotor eine Alternative zu herkömmlichen Verbrennungsmotoren, insbesondere in Fahrzeugen und Bahnsystemen, darstellen.

Bei bekannten Elektro-Fahrzeugen wird die elektrische Energie zunächst in einem Kraftwerk erzeugt und dann an Bord in einer Batterie zwischengespeichert. Hohe Kosten, großes Gewicht, begrenzte Haltbarkeit und lange Aufladezeiten dieser Batterien sind Probleme, die bisher nicht zufriedenstellend gelöst werden konnten.

Besonders vielversprechend scheinen deshalb Konzepte, die ohne Zwischenspeicherung auskommen, den Strom also an Bord und je nach Bedarf erzeugen; insbesondere das Konzept der Brennstoffzellen mit einem protonenleitenden Membranelektrolyten, sogenannten Proton-Exchange-Membrane-Fuel-Cells (PEM-Brennstoffzellen). Der gasförmige Kraftstoff, insbesondere Wasserstoffgas und Sauerstoffgas, muß nicht verbrannt werden, sondern wird in einer sogenannten kalten Reaktion direkt in elektrische Energie und Wasserdampf umgewandelt. Der Elektrolyt in der PEM-Brennstoffzelle trennt die beiden Gase voneinander und verhindert eine sogenannte heiße Reaktion. Ein elektrochemischer Vorgang am Elektrolyten läßt nur Protonen, also positiv geladene Wasserstoff-Ionen (H⁺), passieren. Die Elektronen der Wasserstoff-Atome werden beim Durchgang abgeschieden und bleiben zurück, die Wasserstoff-Ionen reagieren mit den Sauerstoffteilchen auf der anderen Seite. Durch Elektronenüberschuß auf der Wasserstoffseite und Elektronenmangel auf der Sauerstoffseite des Elektrolyts liegt an den benachbarten Elektroden eine Potentialdifferenz an, so daß bei einer elektrischen Verbindung der Elektroden über einen äußeren Stromkreis, in dem ein Verbraucher geschaltet ist, ein elektrischer Strom von der Anode zu der Kathode fließt. Neben der elektrischen Energie entsteht Wärme sowie Wasser als Reaktionsprodukt.

Bei einem Stapel von in Serie geschalteten Brennstoffzellen sind zwischen benachbarten Brennstoffzellen sogenannte Bipolarplatten vorgesehen. Sie leiten in einem labyrinthartigen Kanalsystem den Brennstoff, insbesondere Wasserstoff, beziehungsweise die Luft an den gasseitigen Oberflächen der Elektroden beziehungsweise an den Eintrittsöffnungen der Poren entlang. Außerdem führen sie die Reaktionswärme ab und stellen die elektrische Verbindung zur Nachbarzelle her.

Durch das Zusammenschalten vieler Brennstoffzellen in sogenannten Stacks (Stapel) wird ein Brennstoffzellensystem mit hoher Leistung bereitgestellt. Durch Regelung der Wasserstoffzufuhr kann die Energieabgabe des Systems unmittelbar erzeugt und genau dosiert werden.

Es ist Aufgabe der Erfindung, eine Elektrode bereitzustellen, durch die der Wirkungsgrad einer Brennstoffzelle verbessert wird, sowie eine Brennstoffzelle mit einem erhöhten Wirkungsgrad anzugeben.

Diese Aufgabe wird erfindungsgemäß durch eine Elektrode mit den Merkmalen des Anspruchs 1 beziehungsweise durch die erfindungsgemäße Brennstoffzelle mit den Merkmalen des Anspruchs 15 gelöst. Vorteilhafte Weiterbildungen und Ausgestaltungen der Elektrode sowie der Brennstoffzelle sind Gegenstand der jeweiligen abhängigen Ansprüche.

Die erfindungsgemäße Elektrode zeichnet sich dadurch aus, daß sie wenigstens einen Sammelleiter aufweist, dessen spezifischer Widerstand kleiner als der spezifische Widerstand der übrigen Elektrode ist. Durch ein solches Widerstandsgefälle werden in vorteilhafter Weise die ohmschen Verluste der Elektrode verringert und somit der Wirkungsgrad einer Brennstoffzelle, die wenigstens .eine erfindungsgemäße Elektrode aufweist, erhöht.

Zur Verringerung des Weges, den die Elektronen von einer Oberfläche der Elektrode zum Sammelleiter durchfließen müssen, wird gemäß einer vorteilhaften Ausgestaltung vorgeschlagen, daß der Sammelleiter in der Elektrode angeordnet ist.

Bevorzugt ist eine Ausgestaltung der Elektrode, bei der der Sammelleiter auf der elektrolytseitigen Oberfläche der Elektrode angeordnet ist, da hierdurch der Widerstand der Elektrode weiter verringert werden kann.

Um einen ausreichenden Platz zum Anschluß einer elektrischen Leitung an eine Kontaktstelle der Elektrode zu haben, wird gemäß einer weiteren vorteilhaften Ausgestaltung der erfindungsgemäßen Elektrode vorgeschlagen, daß der wenigstens eine Sammelleiter auf der gasseitigen Oberfläche der Elektrode angeordnet ist.

Der Sammelleiter ist vorzugsweise mit der wenigstens einen Kontaktstelle verbunden und vorzugsweise auf diese ausgerichtet. Die Ausrichtung erfolgt in vorteilhafter Weise so, daß jeweils die gesamte Elektrode in ihrer Geometrie erfaßt ist. Indem die Sammelleiter mit der Kontaktstelle verbunden sind, wird in vorteilhafter Weise eine Entnahme der elektrischen Energie, konzentriert an der Kontaktstelle, ermöglicht.

Die Kontaktstelle kann ein an der Elektrode oder auf ihrer gasseitigen Oberfläche angeordneter Kontaktierungspunkt sein, wobei wenigstens ein Sammelleiter stahlen- beziehungsweise sternförmig auf den Kontaktierungspunkt ausgerichtet ist. Ein solcher Kontaktierungspunkt ist in vorteilhafter Weise mittig auf der Elektrode und/oder in einer der Ecken der Elektrode angeordnet. Von dort können in vorteilhafter Weise die Elektroden trotz verschiedener Polarität schnell, maschinell und einfach miteinander verbunden werden.

Alternativ ist die Kontaktstelle eine an der Elektrode ausgebildete Kontaktierungsseite, wobei wenigstens ein Sammelleiter unter einem Winkel, insbesondere senkrecht, zur Kontaktierungsseite ausgerichtet ist. Die seitliche Anordnung der Kontaktstelle als Kontaktierungsseite ermöglicht in vorteilhafter Weise eine leichte elektrische Verbindung der Brennstoffzellen untereinander, insbesondere bei nebeneinander angeordneten Brennstoffzellen.

Sind in einer Elektrode und/oder auf ihren Oberflächen mehrere Sammelleiter angeordnet, so können diese in vorteilhafter Weise eine netzartige oder eine verästelte Struktur aufweisen, wodurch der Fluß der Elektronen zur Kontaktstelle hin beziehungsweise von ihr weg begünstigt wird.

Vorzugsweise ist wenigstens ein Sammelleiter bandförmig ausgebildet. Alternativ und/oder kumulativ ist wenigstens ein Sammelleiter drahtförmig ausgebildet. Die bandförmigen und/oder drahtförmigen Ausbildungen ermöglichen in vorteilhafter Weise die Bildung einer netzartigen Struktur oder einer verästelten Struktur. Solche Sammelleiter enthalten ein Metall, vorzugsweise Kupfer.

Erfindungsgemäß bevorzugt ist die Elektrode wenigstens teilweise durch einen Graphitkörper und der wenigstens eine Sammelleiter durch in eine Vorzugsrichtung ausgerichtete Graphitfasern des Graphitkörpers gebildet. Solche, als Graphitfasern ausgebildete Sammelleiter können alternativ und/oder kumulativ zu den metallischen Sammelleitern in der Elektrode enthalten sein und verringern in vorteilhafter Weise die ohmschen Verluste an der Elektrode.

Weitere Vorteile und Ausgestaltungen der vorliegenden Erfindung werden anhand exemplarischer Ausführungsbeispiele für eine PEM-Brennstoffzelle, auf die eine Anwendung der Erfindung jedoch nicht beschränkt ist, und anhand der Zeichnung beschrieben. Es zeigen:
- Fig. 1: eine Elektrode mit einem in einer Ecke der Elektrode angeordneten Kontaktierungspunkt;
- Fig. 2: eine Seitenansicht der Elektrode nach Fig. 1;
- Fig. 3: eine Elektrode mit einer seitlich an der Elektrode angeordneten Kontaktierungsseite; und
- Fig. 4: eine Seitenansicht der Elektrode nach Fig. 3.

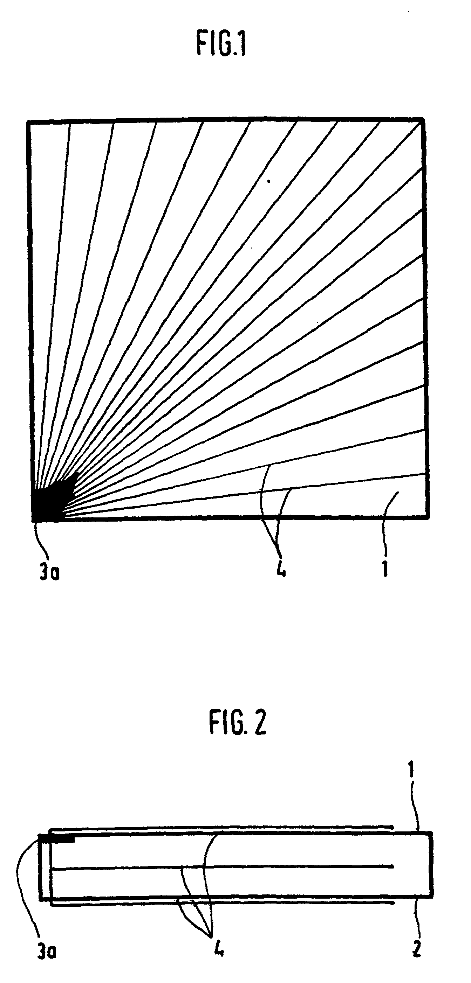

Fig. 1 zeigt eine Elektrode mit einem Kontaktierungspunkt 3a, welcher in einer Ecke der Elektrode auf der gasseitigen Oberfläche 1 angeordnet ist. Mehrere mit dem Kontaktierungspunkt 3a in Verbindung stehende Sammelleiter 4 sind strahlenförmig auf den Kontaktierungspunkt 3a ausgerichtet. Der Begriff Kontaktierungspunkt ist nicht im mathematischen Sinne zu verstehen. Unter einem Kontaktierungspunkt wird eine flächige Ausbildung der Kontaktstelle verstanden, die im Verhältnis zur Oberfläche der Elektrode kleiner, insbesondere wesentlich kleiner ist.

Fig. 2 zeigt die Elektrode nach Fig. 1 in der Seitenansicht. Die Sammelleiter 4 sind dabei in der Elektrode sowie jeweils auf das gasseitigen Oberfläche 1 sowie auf der elektrolytseitigen Oberfläche 2 der Elektrode angeordnet.

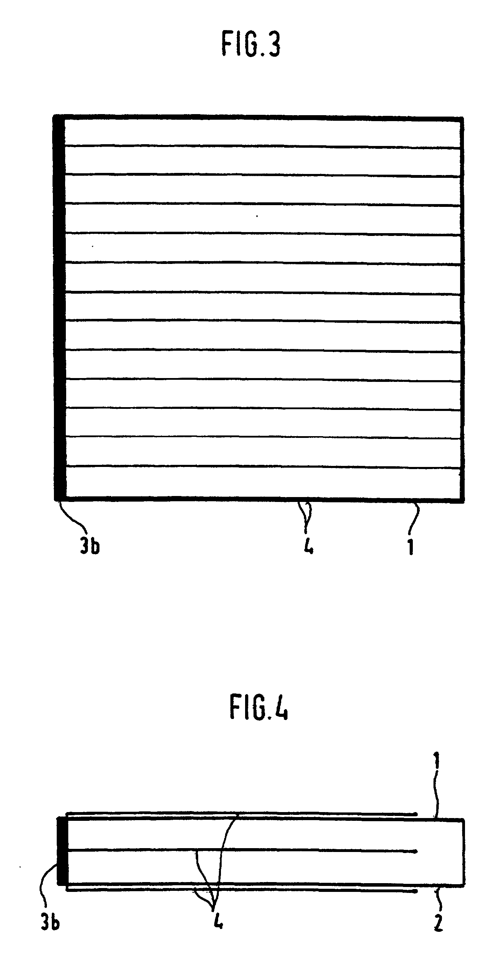

Fig. 3 zeigt eine Elektrode mit einer seitlich angeordneten Kontaktierungsseite 3b und mehreren Sammelleitern 4, welche unter einem Winkel, insbesondere senkrecht, zur Kontaktierungsseite 3b ausgerichtet sind.

Fig. 4 zeigt die Elektrode nach Fig. 3 in der Seitenansicht. Die Sammelleiter 4 sind dabei in der Elektrode sowie jeweils auf das gasseitigen Oberfläche 1 sowie auf der elektrolytseitigen Oberfläche 2 der Elektrode angeordnet.

In jedem Ausführungsbeispiel führen die Sammelleiter in einer als Kathode ausgebildeten Elektrode die beim Durchgang der Wasserstoff-Atome durch den Elektrolyten abgeschiedenen Elektronen der Kontaktierungsstelle 3a, 3b zu beziehungsweise leiten in einer als Anode ausgebildeten Elektrode die Elektronen von der Kontaktierungsstelle 3a, 3b aus zu den positiven Wasserstoff-Ionen. Dadurch werden in vorteilhafter Weise die ohmschen Verluste in beziehungsweise an der Kathode und der Anode verringert und der Wirkungsgrad einer mit solchen Elektroden bestückten Brennstoffzellen erhöht.

Erfindungsgemäße Brennstoffzellen mit erfindungsgemäßen Elektroden verschiedener Polarität sind deshalb in Verbindung mit einem Elektromotor eine Alternative zu herkömmlichen Verbrennungsmotoren, insbesondere in Fahrzeugen und Bahnsystemen.

Eine Kontaktierung von Elektroden untereinander und/oder mit einer Last, beispielsweise einem Elektromotor, kann, unabhängig von einer Anwendung der Erfindung, in vorteilhafter Weise auch dadurch erfolgen, daß als Kontaktstellen Lotfüllungen beziehungsweise angelötete Leiter vorgesehen sind. Alternativ und/oder kumulativ können Kontaktierungen auch mittels Lotstreifen, insbesondere auf der gasseitigen Elektrodenoberfläche, ausgebildet werden. Solche, wenigstens teilweise durch ein Lot ausgebildete Kontaktstellen lassen sich insbesondere einfach und preiswert herstellen und erhöhen gleichfalls, wie die Erfindung, durch die Verringerung der ohmschen Verluste den Wirkungsgrad der Brennstoffzelle, dies um so mehr, wenn beispielsweise gasseitig auf die Elektrode aufgebrachte Lotstreifen zugleich die Funktion eines Sammelleiters nach der Erfindung übernehmen.

## Patentansprüche

1. Elektrode, insbesondere für Brennstoffzellen, mit für ein Fluid, insbesondere Gas, von einer gasseitigen Oberfläche (1) zu einer elektrolytseitigen Oberfläche (2) durchlässigen Poren und mit wenigstens einer elektronenleitenden Kontaktstelle (3), **dadurch gekennzeichnet, daß** die Elektrode wenigstens einen Sammelleiter (4) aufweist, dessen spezifischer Widerstand kleiner als der spezifische Widerstand der Elektrode ist.

2. Elektrode nach Anspruch 1, **dadurch gekennzeichnet, daß** der wenigstens eine Sammelleiter (4) in der Elektrode angeordnet ist.

3. Elektrode nach Anspruch 1 oder 2, **dadurch gekennzeichnet, daß** der wenigstens eine Sammelleiter auf der oder im Bereich der gasseitigen Oberfläche (1) der Elektrode angeordnet ist.

4. Elektrode nach Anspruch 1, 2 oder 3, **dadurch gekennzeichnet, daß** der wenigstens eine Sammelleiter auf der oder im Bereich der elektrolytseitigen Oberfläche (2) der Elektrode angeordnet ist.

5. Elektrode nach einem der vorherigen Ansprüche, **dadurch gekennzeichnet, daß** der wenigstens eine Sammelleiter (4) mit der wenigstens einen Kontaktstelle (3) verbunden ist.

6. Elektrode nach einem der vorherigen Ansprüche, **dadurch gekennzeichnet, daß** der wenigstens eine Sammelleiter (4) auf die wenigstens eine Kontaktstelle (3) ausgerichtet ist.

7. Elektrode nach einem der Ansprüche 1 bis 6, wobei die Kontaktstelle (3) ein an der Elektrode oder auf ihrer gasseitigen Oberfläche (1) angeordneter Kontaktierungspunkt (3a) ist und wobei wenigstens ein Sammelleiter (4) strahlen- beziehungsweise sternförmig auf den Kontaktierungspunkt (3a) ausgerichtet ist.

8. Elektrode nach einem der Ansprüche 1 bis 6, wobei die Kontaktstelle (3) eine an der Elektrode angeordnete Kontaktierungsseite (3b) ist und wobei wenigstens ein Sammelleiter (4) unter einem Winkel, insbesondere senkrecht, zur Kontaktierungsseite (3b) ausgerichtet ist

9. Elektrode nach einem der vorherigen Ansprüche, **dadurch gekennzeichnet, daß** mehrere Sammelleiter (4) vorgesehen sind, die eine netzartige Struktur bilden.

10. Elektrode nach einem der vorherigen Ansprüche, **dadurch gekennzeichnet, daß** mehrere Sammelleiter vorgesehen sind, die eine verästelte Struktur bilden.

11. Elektrode nach einem der vorherigen Ansprüche, **dadurch gekennzeichnet, daß** wenigstens ein Sammelleiter (4) bandförmig ausgebildet ist.

12. Elektrode nach einem der vorherigen Ansprüche, dadurch gekennzeichent, daß wenigstens ein Sammelleiter (4) drahtförmig ausgebildet ist.

13. Elektrode nach Anspruch 11 oder 12, **dadurch gekennzeichnet, daß** der wenigstens eine Sammelleiter (4) aus einem Metall, vorzugsweise Kupfer, gebildet ist.

14. Elektrode nach einem der vorherigen Ansprüche, **dadurch gekennzeichnet, daß** die Elektrode wenigstens teilweise durch einen Graphitkörper und der wenigstens eine Sammelleiter (4) durch in eine Vorzugsrichtung ausgerichtete Graphitfasern des Graphitkörpers gebildet ist.

15. Brennstoffzelle mit zwei Elektroden verschiedener Polarität, zwischen denen ein Elektrolyt angeordnet ist, **dadurch gekennzeichnet, daß** wenigstens eine Elektrode nach einem der Ansprüche 1 bis 14 ausgebildet ist.

## Claims

1. An electrode, in particular for fuel cells with pores, said pores being permeable for a fluid, in particular gas, from a gas-side surface (1) to an electrolyte-side surface (2) and with at least one electron-conducting contact location (3), **characterized in that** said electrode has at least one collecting conductor (4) the specific resistance of which is smaller than the specific resistance of said electrode.

2. The electrode according to claim 1, **characterized in that** said at least one collecting conductor (4) is disposed in said electrode.

3. The electrode according to claim 1 or 2, **characterized in that** the at least one collecting conductor is disposed on or in the region of said gas-side surface (1) of the electrode.

4. The electrode according to claim 1, 2 or 3, **characterized in that** the at least one collecting conductor is disposed on or in the region of said electrolyte-side surface (2) of the electrode.

5. The electrode according to one of the preceding claims, **characterized in that** the at least one collecting conductor (4) is connected to said at least one contact location (3).

6. The electrode according to one of the preceding claims, **characterized in that** said at least one collecting conductor (4) is aligned with said at least one contact location (3).

7. The electrode according to one of claims 1 to 6, wherein said contact location (3) is a contact-making point (3a) disposed on said electrode or on its gas-side surface (1) and wherein at least one collecting conductor (4) is aligned in form of a ray or a star respectively with respect to said contact-making point (3a).

8. The electrode according to one of claims 1 to 6, wherein the contact location (3) is a contact-making side (3b) disposed on said electrode and wherein at least one collecting conductor (4) is aligned at an angle, in particular perpendicularly, to said contact-making side (3b).

9. The electrode according to one of the preceding claims, **characterized in that** a plurality of collecting conductors (4) is provided having a networkshaped structure.

10. The electrode according to one of the preceding claims, **characterized in that** a plurality of collecting conductors is provided having a branched structure.

11. The electrode according to one of the preceding claims, **characterized in that** at least one collecting conductor (4) is formed as a strip.

12. The electrode according to one of the preceding claims, **characterized in that** at least one collecting conductor (4) is formed as a wire.

13. The electrode according to claim 11 or 12, **characterized in that** the at least one collecting conductor (4) is formed from a metal, preferably copper.

14. The electrode according to one of the preceding claims, **characterized in that** the electrode is at least partially formed as a graphite body and said at least one collecting conductor (4) is formed as graphite fibers of the graphite body, said graphite fibers being aligned in a preferred direction.

15. A fuel cell with two electrodes of different polarity between which an electrolyte is disposed, **characterized in that** at least one electrode is formed according to one of claims 1 to 14.

## Revendications

1. Electrode, notamment pour piles à combustible avec des pores perméables à un fluide, notamment à un gaz, à partir d'une surface (1) coté gaz vers une surface coté électrolyte (2) et avec au moins un endroit de contact (3) de conduction d'électrons, **caractérisée en ce que** l'électrode présente au moins un conducteur collecteur (4) dont la résistance spécifique est plus petite que la résistance spécifique de l'électrode.

2. Electrode selon la revendication 1, **caractérisée en ce que** l'au moins un conducteur collecteur (4) est agencé dans l'électrode.

3. Electrode selon la revendication 1 ou 2, **caractérisée en ce que** l'au moins un conducteur collecteur est agencé sur ou dans la zone de la surface coté gaz (1) de l'électrode.

4. Electrode selon la revendication 1, 2 ou 3, **caractérisée en ce que** l'au moins un conducteur collecteur est agencé sur ou dans la zone de la surface coté électrolyte (2) de l'électrode.

5. Electrode selon l'une des revendications précédentes, **caractérisée en ce que** l'au moins un conducteur collecteur (4) est relié à l'au moins un endroit de contact (3).

6. Electrode selon l'une des revendications précédentes, **caractérisée en ce que** l'au moins un conducteur collecteur (4) est aligné sur l'au moins un endroit de contact (3).

7. Electrode selon l'une des revendications 1 à 6, l'endroit de contact (3) étant un point de contact (3a) agencé au niveau de ou sur la surface coté gaz (1) de l'électrode et au moins un conducteur collecteur (4) étant aligné de façon radiée et étoilée respectivement sur le point de contact (3a).

8. Electrode selon l'une des revendications 1 à 6, l'endroit de contact (3) étant un coté de contact (3b) agencé au niveau de l'électrode et au moins un conducteur collecteur (4) étant aligné suivant un angle, notamment perpendiculairement, par rapport au coté de contact (3b).

9. Electrode selon l'une des revendications précédentes, **caractérisée en ce que** plusieurs conducteurs collecteurs (4) sont prévus qui forment une structure réticulée.

10. Electrode selon l'une des revendications précédentes, **caractérisée en ce que** plusieurs conducteurs collecteurs sont prévus, qui forment une structure ramifiée.

11. Electrode selon l'une des revendications précédentes, **caractérisée en ce qu'**au moins un conducteur collecteur (4) est réalisé en forme de ruban.

12. Electrode selon l'une des revendications précédentes, **caractérisée en ce qu'**au moins un conducteur collecteur (4) est réalisé en forme de fil métallique.

13. Electrode selon la revendication 11 ou 12, **caractérisée en ce que** l'au moins un conducteur collecteur (4) est formé de métal, de préférence de cuivre.

14. Electrode selon l'une des revendications précédentes, **caractérisée en ce que** l'électrode est au moins partiellement formée par un corps en graphite et que l'au moins un conducteur collecteur (4) est formé par des fibres de graphite du corps de graphite alignées en une direction préférée.

15. Pile à combustible avec deux électrodes de polarité différente entre lesquelles un électrolyte est agencé, **caractérisée en ce qu'**au moins une électrode est réalisée selon l'une des revendications 1 à 14.
